# EUROPÄISCHE PATENTANMELDUNG

(11) **EP 1 992 210 A1**
(43) Veröffentlichungstag der Anmeldung: **19.11.2008**
(21) Anmeldenummer: 07009647.4
(22) Anmeldetag: 15.05.2007
(51) Int. Cl.: A01B 33/14

(54) **Spargeldammfräsen-Schlegelrotor**

(71) Anmelder: K.I. Konstantinidis & Co. AG, 57022 Thessaloniki (GR)
(72) Erfinder: Konstantinidis, Konstantinos Dipl.-Ing., 54645 Thessaloniki (GR)
(74) Vertreter: Liebl, Thomas

(57) **Zusammenfassung**

Die Erfindung betrifft einen Spargeldammfräsen-Schlegelrotor (1) mit wenigstens einer drehantreibbaren Trägerscheibe (2, 3) auf einem zentralen Wellenabschnitt (4), mit einer Mehrzahl an der Trägerscheibe (2, 3) am Umfang versetzt und vom Umfang mit freien äußeren Schlegelenden abstehender, lösbar angeordneter Schlegel (9) und mit je einer Befestigungsvorrichtung für jeden Schlegel (9) zur Befestigung der Schlegel (9) an der Trägerscheibe (2, 3), wobei jede Befestigungsvorrichtung als formschlüssige, fixierbare Einsteckverbindung für einen zugeordneten Schlegel (9) in der Art eines kanalförmigen Steckgehäuses (7) mit einem Querschnitt entsprechend dem Querschnitt des zugeordneten Schlegels (9) an der Trägerscheibe (2, 3) ausgeführt ist, wobei jedem Steckgehäuse eine Fixiereinrichtung (17) für einen eingesteckten Schlegel (9) zu dessen Halterung im Steckgehäuse (7) zugeordnet ist. Erfindungsgemäß besteht die wenigstens eine Trägerscheibe (2, 3) aus jeweils zwei, axial entsprechend der Stärke eines Schlegels beabstandeten Scheibenwänden (2a, 2b; 3a, 3b). Weiter sind zur Ausbildung des kanalförmigen Steckgehäuses (7) einer Befestigungsvorrichtung zwischen den zugeordneten Scheibenwänden (2a, 2b; 3a, 3b) entsprechend der Breite eines Schlegels (9) beabstandete Kanalseitenwände (10, 10') angebracht sind.

## Beschreibung

Die Erfindung betrifft einen Spargeldammfräsen-Schlegelrotor nach dem Oberbegriff des Anspruchs 1.

Spargeldammfräsen dienen zum Anlegen und zur Pflege von Dämmen auf Spargelfeldern. Spargeldammfräsen weisen ein Fahrwerk mit einem Fahrantrieb auf, mit dem die Spargeldammfräse beim Anlegen eines Dammes mit einer Geschwindigkeit von etwa zwei bis drei Stundenkilometern und bei der Pflege eines Dammes mit etwa fünf Stundenkilometern entlang eines Dammes fortbewegbar ist.

Wesentliche Bestandteile einer Spargeldammfräse sind wenigstens zwei Schlegelrotoren, die in einem Querabstand im Bodenbereich angeordnet sind und über längsachsparallele Wellen gegenläufig antreibbar sind. Der Wellenabstand bestimmt die Dammbreite und beträgt ca. 1500 mm. Der Antrieb erfolgt über starke Zahnräder aus hochwertigem, gehärteten Stahl.

Ein bekannter Dammfräsen-Schlegelrotor (DE 201 01 186; Fig. 5) besteht aus wenigstens einer drehantreibbaren Trägerscheibe auf einem zentralen Wellenabschnitt an der eine Mehrzahl am Umfang versetzte und vom Umfang mit freien äußeren Schlegelenden abstehende Schlegel lösbar angeordnet sind. Für jeden Schlegel ist eine Befestigungsvorrichtung zu seiner Befestigung an der Trägerscheibe vorgesehen.

Bei dem bekannten Schlegelrotor sind zwei oder ggf. drei axial versetzte, gleich aufgebaute Trägerscheiben auf dem zentralen Wellenabschnitt angeordnet und in Achsrichtung gesehen weisen hintereinander auf unterschiedlichen Trägerscheiben angeordnete Schlegel einen Winkelversatz auf. Die Schlegel sind nicht genau radial auf das Scheibenzentrum hin ausgerichtet, sondern jeweils parallel in einem gleichen Abstand zu einer solchen Radialrichtung versetzt, so dass die Schlegel gegenüber einer Radialrichtung schräg von der Trägerscheibe abstehen und in einer jeweiligen Drehrichtung schräg nachlaufen. Die Trägerscheiben sind als Sternscheiben mit sechs Sternzacken ausgeführt, an denen je ein Schlegel an einem Sternzacken diesen überragend befestigt ist. Die Schlegel sind hier durch lösbare Schraubverbindungen befestigt, wobei durch fünf linear versetzte Trägerscheiben-Haltebohrungen Längseinstellungen der Schlegel in unterschiedlichen Positionen und Nachstellungen bei einer Abnutzung möglich sind. Die betriebsmäßig hohen Drehmomente auf die Schlegel werden hier im wesentlichen über die radial äußeren Schraubenbolzen abgestützt, wobei dort die Gefahr von Schlegelbrüchen gegeben ist.

Weiter ist ein gattungsgemäßer Spargeldammfräsen-Schlegelrotor bekannt (DE 201 01 186; Fig. 1 bis 4), bei dem an Stelle einer Schraubverbindung die Befestigungsvorrichtung für einen Schlegel als formschlüssige, fixierbare Einsteckverbindung ausgeführt ist. Dabei ist ein kanalförmiges Steckgehäuse mit einem Querschnitt entsprechend dem Querschnitt des zugeordneten Schlegels auf der Trägerscheibe ausgebildet. Jedem Steckgehäuse ist eine Fixiereinrichtung für einen eingesteckten Schlegel zu dessen Halterung im Steckgehäuse zugeordnet. Die betriebsmäßig auftretenden Drehmomente werden hier im Steckgehäuse abgestützt, wodurch sich bei gleichem Schlegeldurchmesser eine wesentlich erhöhte Belastbarkeit und Bruchfestigkeit eines Schlegels im Vergleich zur eingangs erläuterten Schraubverbindung ergibt. Zudem muss eine Fixiereinrichtung nur eine Verschiebung eines Schlegels im Steckgehäuse verhindern, so dass die Krafteinwirkung auf eine solche Fixiereinrichtung geringer ist als auf eine Schraubbefestigung.

Konkret wird hier jeweils ein Steckgehäuse als Einsteck- und Durchsteckverbindung vorgeschlagen, das jeweils aus einem Abschnitt eines U-Profils hergestellt ist, welches mit seinen freien U-Schenkelendkanten durch Schweißnähte mit der Trägerscheibe verbunden ist. Damit erfolgt die Abstützung der betriebsmäßigen Drehmomente, die insbesondere bei der Bearbeitung von harten und steinigen Böden sehr hoch sein können, in den U-Profilabschnitten über die Schweißnähte. Durch die hohe Belastung dieser Schweißnähte können auch hier Brüche und Verbiegungen am Steckgehäuse auftreten, die zu einer ungünstigen Beeinträchtigung des Betriebs oder zu einem Ausfall eines Schlegelrotors führen können.

Aufgabe der Erfindung ist es demgegenüber einen bekannten, gattungsgemäßen Dammfräsen-Schlegelrotor so weiterzubilden, dass die Stabilität des Schlegelrotors, insbesondere die Stabilität der Einsteckverbindungen für die Schlegel bei einem dennoch einfachen und kostengünstigen Aufbau erhöht wird.

Diese Aufgabe wird mit den Merkmalen des Anspruchs 1 gelöst.

Gemäß Anspruch 1 besteht die wenigstens eine Trägerscheibe aus jeweils zwei axial entsprechend der Stärke eines Schlegels beabstandeten Scheibenwänden. Zudem sind zwischen zwei zugeordneten Scheibenwänden entsprechend der Breite eines Schlegels beabstandete Kanalseitenwände angebracht, wodurch für jeden Schlegel ein kanalförmiges Steckgehäuse für eine formschlüssige Einsteckverbindung ausgebildet ist.

So ausgebildete Einsteckverbindungen zwischen zwei zugeordneten Trägerscheiben in Verbindung mit Kanalwänden sind hochbelastbar und stabil ausführbar, so dass die Funktionssicherheit und Standzeit solcher Spargeldamm-Schlegelrotoren erheblich verbessert sind.

In einer besonders bevorzugten Ausführungsform nach Anspruch 2 sind die Kanalseitenwände jeweils durch rechteckige Metallplatten gebildet. Am Anbringungsort dieser Metallplatten sind jeweils gegenüberliegende Einsteckschlitze an den zugeordneten metallischen Scheibenwänden angebracht, wobei diese Einsteckschlitze die Scheibenwände durchdringen und eine Schlitzbreite entsprechend der Materialstärke der Metallplatten aufweisen. Die Metallplatten als Kanalseitenwände sind somit hier in den Einsteckschlitzen der Scheibenwände formschlüssig gehalten und die betriebsmäßig auftretenden hohen Belastungen und Drehmomente sind über die Einsteckschlitze unmittelbar in den Scheibenwänden abgestützt. Die eingesteckten Metallplatten können vorzugsweise durch Einpressen und/oder zusätzlich durch Schweißen in den Einsteckschlitzen fixiert sein, wobei auf diese Fixierungen nur eine geringe Belastung wirkt, da die Abstützung der Metallplatten unmittelbar in den Einsteckschlitzen an den Scheibenwänden erfolgt. Hochbelastete, bruchgefährdete Schweißverbindungen liegen somit hier nicht vor.

Gemäß Anspruch 3 können die Metallplatten vorteilhaft eine Breite aufweisen dergestalt, dass sie im eingesteckten Zustand jeweils mit einem Steg zu beiden Seiten der zugeordneten Scheibenwände vorstehen und in dieser Position durch Einpressen und/oder durch Schweißen und/oder durch Verprägen oder durch andere bekannte Maßnahmen fixiert sind. Für eine weitere Erhöhung der Stabilität und der Verschleißfestigkeit in diesem Bereich können zudem zwischen zwei zugeordneten Stegen auf der Trägerscheibenaußenseite Verstärkungsplatten zur Materialverstärkung angebracht, vorzugsweise angeschweißt sein.

In einer konkreten Ausführungsform nach Anspruch 4 umfasst die Fixiereinrichtung wenigstens eine Steckgehäuse-Haltebohrung, welche antriebsachsparallel das Steckgehäuse durchdringt. Vorzugsweise ist eine solche Steckgehäuse-Haltebohrung in einer Verstärkungsplatte gemäß Anspruch 3 angeordnet, wodurch einer Materialschwächung durch die Haltebohrung entgegengewirkt wird. In dem jeweils zugeordneten Schlegel ist zudem wenigstens eine Schlegel-Haltebohrung angebracht. Der jeweilige Schlegel ist mittels eines durch die Steckgehäuse-Haltebohrung und die fluchtende Schlegel-Haltebohrung durchsteckbaren und mittels eines Splints sicherbaren Haltebolzens fixierbar. Eine solche durch einen Splint gesicherte Steckbolzen-Halterung kann schnell und einfach ohne besonderes Werkzeug hergestellt und gelöst werden. Längskräfte auf den Schlegel im Steckgehäuse werden vom Haltebolzen stabil und sicher abgestützt, wobei ein einziger Haltebolzen ausreichend ist.

In einer besonders vorteilhaften Weiterbildung nach Anspruch 5 sind mehrere in Gehäuseachsrichtung versetzte Steckgehäuse-Haltebohrungen und mehrere im Einsteckbereich des zugeordneten Schlegels versetzt angebrachte Schlegel-Haltebohrungen vorgesehen. Vorzugsweise werden zwei Steckgehäuse-Haltebohrungen und zwei Schlegel-Haltebohrungen angebracht, wodurch sich bei entsprechenden Kombinationen eine vierfache veränderbare Längeneinstellung eines Schlegels ergibt. Dadurch können unterschiedliche Schlegellängen verwendet werden und Schlegel bis zu einem durch Abnutzung erforderlichen Schlegelaustausch gut genutzt werden.

Gemäß Anspruch 6 soll das Steckgehäuse beidseitig offen und als Einsteck- und Durchsteckverbindung für einen zugeordneten Schlegel ausgebildet sein. Zudem ist es einfach herstellbar und wegen der Durchsteckmöglichkeit lässt es eine weite Schlegellängsverstellung zu. Das Steckgehäuse soll dabei mit einem äußeren Gehäuseende an einem äußeren Umfangsbereich der Trägerscheibe beginnen, wodurch die frei abstehende Schlegellänge als freies Hebellänge vorteilhaft kurz ist. Das Steckgehäuse kann insbesondere aus Platzgründen mit einem inneren Gehäuseende in einem Abstand zum zentralen Wellenabschnitt enden, wobei jedoch die Gehäuselänge für eine ausreichende Basis der Drehmoment-Abstützung genügend lang zu dimensionieren ist. Zudem ist die äußere Gehäuseendenkante mit einem Verschleißschutzteil abgedeckt, welches aus einem besonders stabilen und abriebfesten Material hergestellt ist.

In einer einfachen, konkreten Ausführungsform nach Anspruch 7 ist das Verschleißschutzteil ein Winkelteil aus Spezialstahl. Das Winkelteil deckt mit einem Winkelschenkel mit abgekantetem Abdecksteg die Gehäuseendenkante in Blickrichtung des eingesteckten Schlegels ab. Zudem ist die Trägerscheibe als Sternscheibe mit an den Sternzacken angeordneten Steckgehäusen ausgebildet. Das Winkelteil deckt dabei mit wenigstens einem weiteren Winkelschenkel mit abgekantetem Abdecksteg einen äußeren Sternzackenkantenbereich ab. Ein Verschleißschutz ist hier mit nur einem Winkelschenkel in Drehrichtung des Schlegelrotors am verschleißbelasteten Sternzackenkantenbereich ausreichend. Die Winkelflachteile der Winkelschenkel liegen dabei auf der Trägerscheibenaußenseite und/oder ggf. an vorstehenden Stegen der Metallplatten an und sind dort vorzugsweise durch Schweißen fixiert.

Die Schlegel können nach Anspruch 8 in an sich bekannter Weise mit jeweils gleichen Querschnittmaßen als Flachstahlstäbe aus gehärtetem Stahl hergestellt werden.

Nach Anspruch 9 ist es auch hier in an sich bekannter Weise zweckmäßig, die Schlegel nicht exakt radial auszurichten, sondern diese durch eine parallele Versetzung zu einer Radialrichtung mit einer Schrägstellung nachlaufend auszuführen.

Gute Dammbearbeitungsergebnisse werden nach Anspruch 10 mit sechs Schlegeln erreicht, die in gleichmäßigen Abständen versetzt an der Trägerscheibe angeordnet sind, wobei gemäß Anspruch 11 an einem Schlegelrotor zwei gleiche, axial versetzte Trägerscheiben angebracht sind und hintereinander liegende Schlegel einen Winkelversatz aufweisen.

Für eine einfache Montage, eine geeignete Übertragung der Antriebsdrehzahl und für einen ggf. einfachen Austausch den gesamten Schlegelrotors soll nach Anspruch 12 der Wellenabschnitt beidseitig Anschlussflansche aufweisen.

Anhand einer Zeichnung wird die Erfindung näher erläutert.

Es zeigen:
- Fig. 1: eine schematische, perspektivische Vorderansicht eines Spargeldammfräsen-Schlegelrotors, Fig. 2
- Fig. 2: eine perspektivische Rückansicht des Spargeldammfräsen-Schlegelrotors nach Fig. 1.

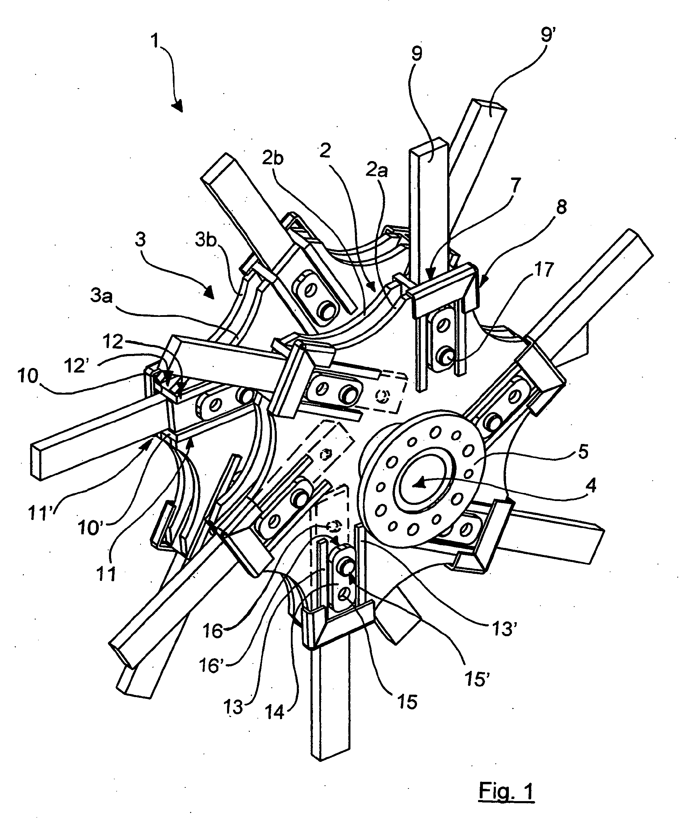

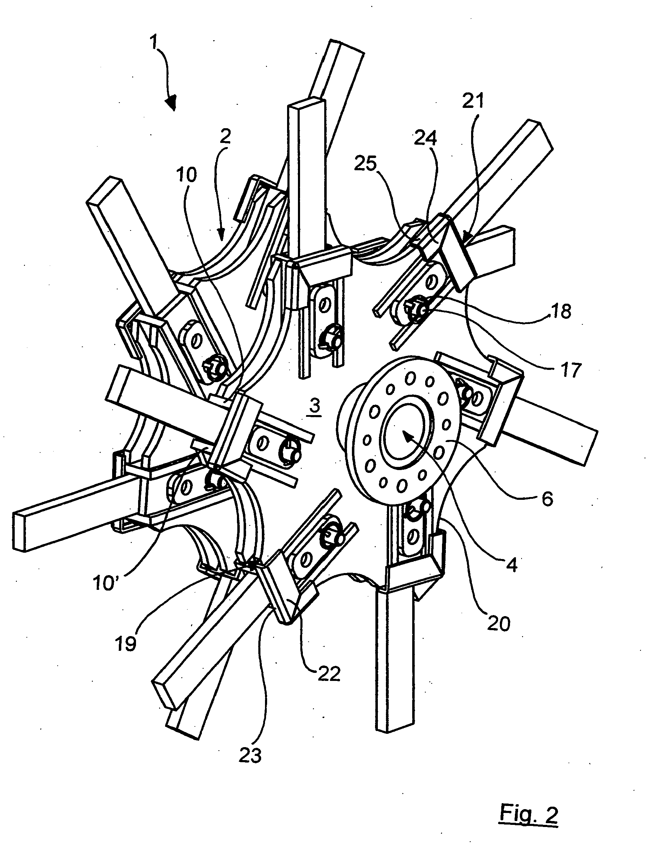

In Fig. 1 ist eine perspektivische Vorderansicht eines Spargeldammfräsen-Schlegelrotors 1 und in Fig. 2 eine entsprechende Rückansicht gezeigt. Der Schlegelrotor 1 umfasst zwei drehantreibbare axial versetzte sowie gleich aufgebaute Trägerscheiben 2, 3, die auf einem zentralen Wellenabschnitt 4 angeordnet sind. Der Wellenabschnitt 4 weist ferner beidseitig jeweils einen Anschlussflansch 5, 6 auf. Die Trägerscheiben 2, 3 sind jeweils durch radial äußere Einbuchtungen in der Art von Sternscheiben ausgebildet, wobei an den Sternzacken 8 jeweils ein Steckgehäuse 7 angeordnet ist. Jedes der Steckgehäuse 7 ist beidseitig offen ausgeführt und als Einsteck- und Durchsteckverbindung für einen zugeordneten Schlegel 9 ausgebildet, wobei in dem hier gezeigten, konkreten Ausführungsbeispiel jeweils sechs Schlegel 9 in gleichmäßigen Winkelabständen versetzt an den Trägerscheiben 2, 3 angeordnet sind. Die Schlegel 9 der Trägerscheibe 2 weisen gegenüber den Schlegeln 9' der Trägerscheibe 3 einen Winkelversatz auf.

Die Trägerscheiben 2 und 3 bestehen jeweils aus zwei axial entsprechend der Stärke eines Schlegels 9 beabstandeten Scheibenwänden 2a, 2b bzw. 3a, 3b. Zur Ausbildung der Steckgehäuse 7 für eine formschlüssige Einsteckverbindung für die Schlegel sind zwischen den jeweils zugeordneten Scheibenwänden 2a, 2b bzw. 3a, 3b rechteckige Metallplatten 10, 10' als Kanalseitenwände angebracht. Dazu sind am Anbringungsort dieser Metallplatten 10, 10' in den zugeordneten Scheibenwänden 2a, 2b bzw. 3a, 3b jeweils gegenüberliegende Einsteckschlitze 11, 11', 12, 12' angebracht, in denen die Metallplatten 10, 10' in der Schlegelbreite beabstandet eingesteckt und durch Einpressen und/oder Schweißen und/oder Verprägen fixiert sind.

Die Metallplatten 10, 10' stehen dabei jeweils an den zugeordneten Scheibenwänden 2a, 2b bzw. 3a, 3b mit Stegen 13, 13' vor, zwischen denen zur Materialverstärkung jeweils längliche Verstärkungsplatten 14 angebracht sind.

In Gehäuseachsrichtung versetzt sind durch die Verstärkungsplatten 14 hindurch jeweils zwei Steckgehäuse-Haltebohrungen 15, 15' angebracht und entsprechend am Schlegel 9 zwei Schlegel-Haltebohrungen 16, 16'. Durch die jeweils fluchtende Steckgehäuse-Haltebohrung 15' und Schlegel-Haltebohrung 16' ist für eine Fixierung in Einsteckrichtung jeweils ein Haltebolzen 17 gesteckt, der an der Schlegelrotorrückseite mittels eines Splints 18 (Fig. 2) gesichert ist.

Für eine formschlüssige Einsteckverbindung ist der Querschnitt der Schlegel 9 jeweils im Querschnitt des entsprechend zugeordneten Steckgehäuses 7 ausgebildet, wobei die Schlegel 9 mit jeweils gleichen Querschnittmaßen als Flachstahlstäbe aus gehärtetem Stahl hergestellt sind.

Ersichtlich sind die Schlegel 9 nicht exakt radial ausgerichtet, sondern die Gehäuseachsrichtung liegt jeweils gegenüber einer Radialrichtung parallel um einen bestimmten Abstand in der Drehrichtung versetzt.

An den jeweils axial äußeren Scheibenwänden 2a und 3b sind im Bereich der äußeren Gehäuseendenkanten 19 und einem in Drehrichtung anschließenden Sternzackenkantenbereich 20 Verschleißschutzteile angebracht, die diese Kantenbereiche abdecken. Konkret sind diese Verschleißschutzteile 21 als Winkelteile ausgebildet, wobei ein Winkelschenkel 22 mit einem abgekanteten Abdecksteg 23 jeweils die Gehäuseendenkante 19 abdeckt und schützt. Der andere kürzere Winkelschenkel 24 deckt ebenfalls mit einem Abdecksteg 25 den Sternzackenkantenbereich 20 anschließend an den Gehäuseendenkantenbereich 19 ab. Die Verschleißschutzteile 21 sind aus besonders stabilem abriebfesten Spezialstahl hergestellt.

## Patentansprüche

1. Spargeldammfräsen-Schlegelrotor
mit wenigstens einer drehantreibbaren Trägerscheibe (2, 3) auf einem zentralen Wellenabschnitt (4),
mit einer Mehrzahl an der Trägerscheibe (2, 3) am Umfang versetzt und vom Umfang mit freien äußeren Schlegelenden abstehender, lösbar angeordneter Schlegel (9), und
mit je einer Befestigungsvorrichtung für jeden Schlegel (9) zur Befestigung der Schlegel (9) an der Trägerscheibe (2, 3), wobei
jede Befestigungsvorrichtung als formschlüssige, fixierbare Einsteckverbindung für einen zugeordneten Schlegel (9) in der Art eines kanalförmigen Steckgehäuses (7) mit einem Querschnitt entsprechend dem Querschnitt des zugeordneten Schlegels (9) an der Trägerscheibe (2, 3) ausgeführt ist, wobei
jedem Steckgehäuse (7) eine Fixiereinrichtung (17) für einen eingesteckten Schlegel (9) zu dessen Halterung im Steckgehäuse (7) zugeordnet ist.
**dadurch gekennzeichnet**,
die wenigstens eine Trägerscheibe (2, 3) aus jeweils zwei, axial entsprechend der Stärke eines Schlegels (9) beabstandeten Scheibenwänden (2a, 2b; 3a, 3b) besteht und weiter zur Ausbildung eines kanalförmigen Steckgehäuses (7) zwischen den Scheibenwänden (2a, 2b; 3a, 3b) entsprechend der Breite eines Schlegels beabstandete Kanalseitenwände (10, 10') angebracht sind.

2. Spargeldammfräsen-Schlegelrotor nach Anspruch 1, **dadurch gekennzeichnet, dass** die Kanalseitenwände jeweils rechteckige Metallplatten (10, 10') sind,
dass am Anbringungsort dieser Metallplatten (10, 10') gegenüberliegende Einsteckschlitze (11, 11'; 12, 12') an den zugeordneten metallischen Scheibenwänden (2a, 2b; 3a, 3b) angebracht sind, und
dass die Einsteckschlitze (11, 11'; 12, 12') die Scheibenwände (2a, 2b; 3a, 3b) durchschneiden und eine Schlitzbreite entsprechend der Materialstärke der Metallplatten (10. 10') aufweisen.

3. Spargeldammfräsen-Schlegelrotor nach Anspruch 2, **dadurch gekennzeichnet, dass** die Metallplatten (10, 10') eine Breite dergestalt aufweisen, dass sie im eingesteckten Zustand jeweils mit einem Steg (13, 13') zu beiden Seiten der zugeordneten Scheibenwände (2a, 2b; 3a, 3b) vorstehen und durch Einpressen und/oder durch Schweißen fixiert sind, und
dass zwischen zwei zugeordneten Stegen (13, 13') auf der Trägerscheibenaußenseite Verstärkungsplatten (14) zur Materialverstärkung angebracht, vorzugsweise angeschweißt sind.

4. Spargeldammfräsen-Schlegelrotor nach einem der Ansprüche 1 bis 3, **dadurch gekennzeichnet, dass** die Fixiereinrichtung wenigstens eine Steckgehäuse-Haltebohrung (15, 15') umfasst, welche antriebsachsparallel das Steckgehäuse (7) durchdringt, und ggf. auch eine Verstärkungsplatte durchdringt,
dass in dem jeweils zugeordneten Schlegel (9) wenigstens eine Schlegel-Haltebohrung (16, 16') angebracht ist, und
dass der jeweilige Schlegel (9) mittels eines durch die Steckgehäuse-Haltebohrung (15, 15') und die fluchtende Schlegel-Haltebohrung (16, 16') durchsteckbaren und mittels eines Splints (18) sicherbaren Haltebolzens (17) fixierbar ist.

5. Spargeldammfräsen-Schlegelrotor nach Anspruch 4, **dadurch gekennzeichnet, dass** mehrere in Gehäuseachsrichtung versetzte Steckgehäuse-Haltebohrungen (15, 15') und mehrere, im Einsteckbereich des zugeordneten Schlegels (9) versetzte Schlegel-Haltebohrungen (16, 16') angebracht sind.

6. Spargeldammfräsen-Schlegelrotor nach einem der Ansprüche 1 bis 5, **dadurch gekennzeichnet,**
**dass** das Steckgehäuse (7) beidseitig offen ist und als Einsteck- und Durchsteckverbindung für einen zugeordneten Schlegel (9) ausgebildet ist,
**dass** das Steckgehäuse (7) mit einem äußeren Gehäuseende an einem äußeren Umfangsbereich der Trägerscheibe (2, 3) beginnt und mit einem inneren Gehäuseende in einem Abstand zum zentralen Wellenabschnitt (4) endet, und
**dass** die äußere Gehäuseendenkante (19) mit einem Verschleißschutzteil (21) abgedeckt ist.

7. Spargeldammfräsen-Schlegelrotor nach Anspruch 6, **dadurch gekennzeichnet, dass** das Verschleißschutzteil (21) ein Winkelteil aus Spezialstahl ist, das mit einem Winkelschenkel (22) mit abgekantetem Abdecksteg (23) einerseits die Gehäuseendenkante (19) in Blickrichtung des eingesteckten Schlegels (9) abdeckt, und
dass die Trägerscheibe (2, 3) als Sternscheibe mit an den Sternzacken (8) angeordneten Steckgehäusen (7) ausgebildet ist, wobei das Winkelteil mit wenigstens einem weiteren Winkelschenkel (24) mit abgekantetem Abdecksteg (25) einen äußeren Sternzackenkantenbereich (20) abdeckt und Winkelflachteile auf der Trägerscheibenaußenseite, ggf. an vorstehenden Stegen (13, 13') der Metallplatten (10, 10') anliegen und vorzugsweise durch Schweißnähte mit den Scheibenwänden (2a, 3b) verbunden sind.

8. Spargeldammfräsen-Schlegelrotor nach einem der Ansprüche 1 bis 7, **dadurch gekennzeichnet, dass** die Schlegel (9) mit jeweils gleichen Querschnittmaßen als Flachstahl-Stäbe aus gehärtetem Stahl hergestellt sind.

9. Spargeldammfräsen-Schlegelrotor nach einem der Ansprüche 1 bis 8, **dadurch gekennzeichnet, dass** die Gehäuseachsrichtung jeweils gegenüber einer Radialrichtung parallel um einen bestimmten Abstand in der Drehrichtung versetzt liegt.

10. Spargeldammfräsen-Schlegelrotor nach einem der Ansprüche 1 bis 9, **dadurch gekennzeichnet, dass** sechs Schlegel (9) in gleichen Winkelabständen versetzt an der Trägerscheibe (2, 3) angeordnet sind.

11. Spargeldammfräsen-Schlegelrotor nach einem der Ansprüche 1 bis Anspruch 10, **dadurch gekennzeichnet, dass** wenigstens zwei axial versetzte, gleich aufgebaute Trägerscheiben (2, 3) auf dem zentralen Wellenabschnitt (4) angeordnet sind, wobei in Achsrichtung gesehen, hintereinanderliegende Schlegel (9) einen Winkelversatz aufweisen.

12. Spargeldammfräsen-Schlegelrotor nach einem der Ansprüche 1 bis Anspruch 11, **dadurch gekennzeichnet, dass** der Wellenabschnitt (4) beidseitig jeweils einen Anschlussflansch (5, 6) aufweist.
